Europäisches Patentamt

**European Patent Office**

**Office européen des brevets**

(19)

(11) Veröffentlichungsnummer: **0 179 282 B1**

(12) **EUROPÄISCHE PATENTSCHRIFT**

(45) Veröffentlichungstag der Patentschrift: **28.08.91**

(51) Int. Cl.⁵: **B60T 8/00**

(21) Anmeldenummer: **85111979.2**

(22) Anmeldetag: **21.09.85**

(54) **Verfahren zur zentralen Gewinnung eines der Fahrzeuggeschwindigkeit angenäherten Bezugssignals.**

(30) Priorität: **29.09.84 DE 3435864**

(43) Veröffentlichungstag der Anmeldung:
**30.04.86 Patentblatt 86/18**

(45) Bekanntmachung des Hinweises auf die
Patenterteilung:
**28.08.91 Patentblatt 91/35**

(84) Benannte Vertragsstaaten:
**AT CH DE FR GB IT LI SE**

(56) Entgegenhaltungen:
**EP-A- 0 039 606**
**US-A- 4 053 188**

(73) Patentinhaber: **ROBERT BOSCH GMBH**
**Postfach 50**
**W-7000 Stuttgart 1(DE)**

(72) Erfinder: **Bräuninger, Jürgen, Dr. rer.nat.**
**Dipl.-Math.**
**Kaiserslauterer Strasse 60**
**W-7000 Stuttgart 31(DE)**

(74) Vertreter: **Kammer, Arno, Dipl.-Ing.**
**ROBERT BOSCH GmbH Zentralabteilung Patente Postfach 50**
**W-7000 Stuttgart 1(DE)**

Rank Xerox (UK) Business Services

## Beschreibung

Die Erfindung betrifft ein Verfahren zur zentralen Gewinnung eines im Verlauf der Fahrzeuggeschwindigkeit angenäherten Bezugssignals gemäß dem Oberbegriff des Anspruchs 1.

Aus der DE-A 25 58 712 ist es bekannt, ein derartiges Bezugssignal dadurch zu gewinnen, daß man im Regelfall die größere von zwei Radgeschwindigkeiten auswählt und diese Größe nach vorgegebenen Zeitkonstanten sich verändern läßt. Die verschiedenen Zeitkonstanten haben unterschiedliche Steigungen der Änderung des Bezugssignals zur Folge. Die Umschaltung auf die verschiedenen Zeitkonstanten wird dort aufgrund der einzelnen Radgeschwindigkeitssignale im Vergleich zu dem Bezugssignal und anderer Kriterien vorgenommen: eine positive Steigung wird dort wirksam, wenn ein Radgeschwindigkeitssignal größer als das Bezugssignal ist, eine große negative Steigung wird wirksam, wenn beide Radgeschwindigkeiten kleiner als die Bezugsgröße sind und eine kleine negative Steigung wird wirksam, wenn an beiden Rädern durch die Antiblockierregelung der Druck abgebaut oder konstantgehalten wird. Es können noch weitere Zeitkonstanten bzw. Steigungen vorgesehen sein. Man sieht, daß die positive Steigung hier Priorität hat, denn es genügt schon, daß das Geschwindigkeitssignal eines Rads größer als das Bezugssignal ist, um diese positive Steigung wirksam zu machen.

Die Verwendung von Mikroprozessoren in Antiblockierreglern ist an sich ebenfalls bekannt.

Die erfindungsgemäße Lösung gemäß dem Patentanspruch 1 hat gegenüber dem Stand der Technik den wesentlichen Vorteil, daß nicht Radgeschwindigkeiten von den Mikroprozessoren zur zentralen Gewinnung des Bezugssignals übertragen werden müssen. Vielmehr werden von den anderen Mikroprozessoren nur Codenummern, also kurze digitale Worte, zum Referenzprozessor übertragen. Vom Referenzprozessor wird gemäß Anspruch 1 nur das Bezugssignal zu den anderen Mikroprozessoren übertragen. Wird das Verfahren nach Anspruch 1 durch die Merkmale der Ansprüche 2 bis 4 ergänzt, so wird sichergestellt, daß Übertragungsfehler erkannt werden. Das erfindungsgemäße Verfahren kann bei Antiblockierreglern, soweit Schlupf in die Regelung einbezogen ist, als auch bei Antriebsschlupfregeln einsetzt werden.

Anhand der Zeichnung werden Ausführungsbeispiele der Erfindung näher erläutert. Es zeigen

Fig. 1    ein Ausführungsbeispiel eines erfindungsgemäß aufgebauten Antiblockierreglers mit 3 Mikroprozessoren für ein Dreiachsfahrzeug,

Fig. 2    ein Ausführungsbeispiel mit sechs Mikroprozessoren für ein Dreiachsfahrzeug.

Fig. 3 und 4 Flußdiagramme, die den Referenzprozessor (Fig.3) bzw. die andern Mikroprozessoren (Fig. 4) betreffen.

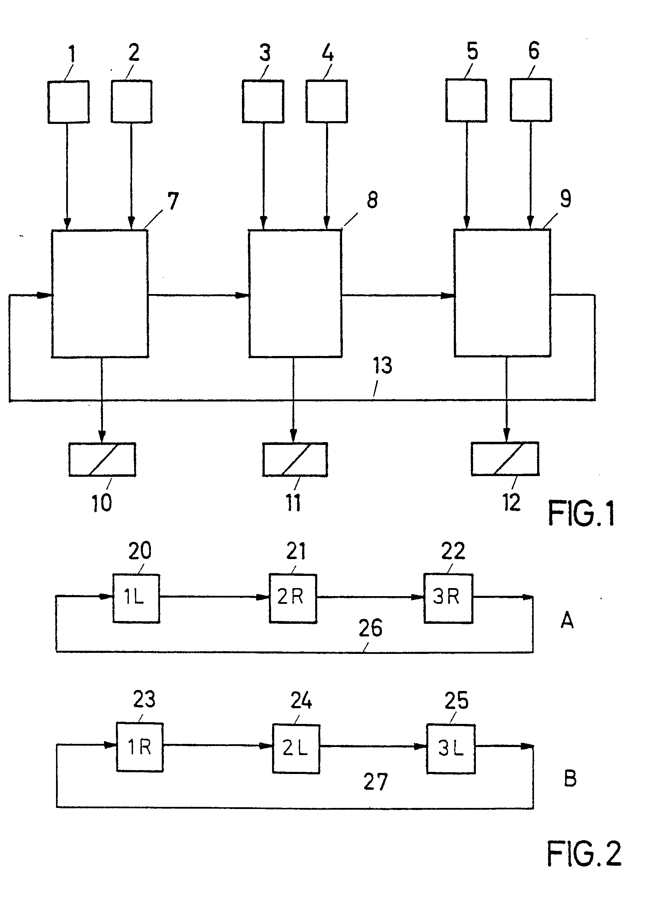

In Fig. 1 sind mit 1-6 Meßwertgeber und -Wandler bezeichnet, die den Radgeschwindigkeiten entsprechende digitale Signale Mikroprozessoren 7-9 zur Verarbeitung zu Bremsdrucksteuersignalen für die Magnetventile 10-12 (je Achse 1 Ventil) zuführen. Dort wird der Radschlupf festgestellt und Radbeschleunigungs- und Radverzögerungssignale in bekannter Weise gebildet und zu Bremsdrucksteuersignalen verarbeitet.

Zur Bestimmung des Radschlupfes benötigt man ein im Verlauf der Fahrzeuggeschwindigkeit angenähertes Bezugssignal. Dieses soll hier im Mikroprozessor 8, der hier zusätzlich den Referenzprozessor beinhalten soll, errechnet werden. Zu diesem Zweck sind die Mikroprozessoren 7-9 in eine Ringleitung 13 eingeschaltet. Aufgrund der Feststellung, ob das Bezugssignal kleiner als das zugeordnete Radgeschwindigkeitssignal ist oder größer oder wie das zugehörige Ventil angesteuert ist, wird in den einzelnen Mikroprozessoren 7-9 vorgeschlagen, ob eine positive Steigung, eine große negative Steigung oder eine kleine negative Steigung für die Veränderung des Bezugssignals aus der Sicht des einzelnen Mikroprozessors angebracht ist. Der festgestellten Wunschsteigung wird eine aus nur wenigen Zeichen bestehende Codenummer zugeordnet. Im Mikroprozessor 8 ist eine Prioritätsreihenfolge der möglichen Steigungen festgelegt.

Die Bildung des Bezugssignals läuft wie folgt ab:

1. Es wird von einem Zustand ausgegangen, bei dem im Referenzprozessor 8 ein neues Bezugssignal aus dem im vorhergehenden Programmzyklus festgelegten Bezugssignal und der gerade ermittelten optimalen Steigung berechnet wurde. Dieses Bezugssignal wird über die Ringleitung zu dem Mikroprozessor 9, von hier zum Mikroprozessor 7 und von hier zurück zum Referenzprozessor 8 übermittelt.

Jeder der Prozessoren benutzt dieses Bezugssignal zur Schlupfermittlung des zugehörigen Rads und damit zur Bremsdrucksteuerung. Durch die Rücklieferung des Bezugssignals zum Referenzprozessor und Identitätsvergleich wird die richtige Übertragung des Bezugssignals überprüft.

2. Zusätzlich werden über die Ringleitung 13 die von den beiden Mikroprozessoren 7 und 9 vorher übermittelten Codenummern zu den Mikroprozessoren 7 und 9 übermittelt. Jeder Mikroprozessor gibt die nicht von ihm stammende Codenummer auf der Ringleitung 13 weiter. Die von ihm stammende Codenummer vergleicht er mit der vorher von ihm vorgeschlagenen Codenummer auf Identität. Er ersetzt nun aber die von ihm stammende Codenummer in diesem Codenummerntelegramm durch einen von ihm ermittelten neuen Vorschlag. Auf diese Weise trifft nach Durchlaufen der Ringleitung 13 ein Codenummerntelegramm im Referenzprozessor ein, das die neuen Vorschläge der Mikroprozessoren 7 und 9 für die Steigung enthält.

3. Diese eingegangenen Vorschläge der Mikroprozessoren 7 und 9 und der Vorschlag des Referenzprozessors 8 selbst werden nun mit der festgelegten Prioritätsreihenfolge verglichen. Der Vorschlag des Prozessors; der die höchste Priorität hat, bestimmt nun die Steigung, mit der das vorhergehende Bezugssignal zur Errechnung des neuen Bezugssignals verändert wird. Der Vorschlag einer positiven Steigung hat dabei z.B. den Vorrang vor der negativen kleinen Steigung und dieser vor der negativen großen Steigung.

In Fig. 2, die nur die Mikroprozessoren und die Ringleitung zeigt, ist ein Dreiachsfahrzeug mit sechs Prozessoren unterstellt. Die Prozessoren sind in zwei Gruppen A und B (20-22 und 23-25) unterteilt und jede Gruppe ist über eine Ringleitung 26 bzw. 27 miteinander verbunden. Zur hier vorgesehenen Bildung zweier Bezugssignale sind hier die Mikroprozessoren folgender Räder zusammengefaßt:

Gruppe A

| Achse I | linkes Rad |
| Achse II | rechtes Rad |
| Achse III | rechtes Rad |

Gruppe B

| Achse I | rechtes Rad |
| Achse II | linkes Rad |
| Achse III | linkes Rad |

Jedes Bezugssignal wird jeweils den Mikroprozessoren zugeführt, die durch ihren Vorschlag an der Bildung dieses Bezugssignals beteiligt sind.

Als Mikroprozessoren können übliche Geräte, so z. B. $\mu$P Motorola 6801 U4 oder Intel 8051 eingesetzt werden.

Das Datentelegramm das über die Ringleitung der Fig. 1 gegeben wird, kann z. B. wie folgt aufgebaut sein:

- Referenzsignal (8 Bit)
- Codenummer A (3 Bit)
  Vorschlag des $\mu$P 9
- Codenummer B (3 Bit)
  Vorschlag des $\mu$P 7

Ist ein gesonderter Referenzprozessor vorgesehen, so würde noch eine weitere Codenummer C des dritten Mikroprozessors hinzu kommen.

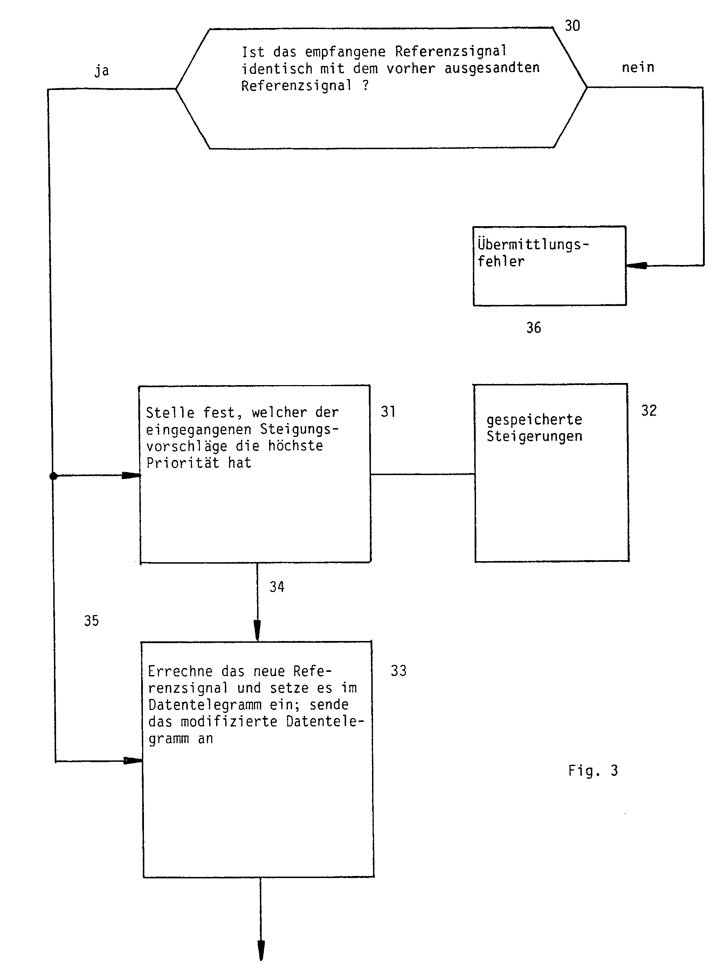

Fig. 3 zeigt ein mögliches Flußdiagramm für den Referenzprozessor 8 der Fig. 1. In einem Block 30 wird festgestellt, ob das empfangene Referenzsignal dem zuvor an die Ringleitung abgegebenen Referenzsignal entspricht. Ist dies der Fall, so wird das Datentelegramm in den Block 31 geleitet, der mit einem weiteren Block 32 verbunden ist, in dem die möglichen Steigungen in einer gegebenen Prioritätsreihenfolge abgespeichert und durch Codenummern gekennzeichnet sind. Im Block 31 in Verbindung mit Block 32 wird nun festgestellt, welcher der als Codenummern eingegangenen Steigungsvorschläge die höchste Priorität hat. Das Ergebnis wird über eine Leitung 34 an einen Block 33 gemeldet, der über eine Leitung 35 ebenfalls das Datentelegramm zugeleitet wird. Ausgehend vom zuletzt berechneten Referenzsignal wird mit Hilfe der vorgeschlagenen Steigung höchster Priorität und der Taktzeit des Mikroprozessors im Block 33 das neue Referenzsignal errechnet und für das vorhergehende Referenzsignal in das Datentelegramm eingefügt. Danach erfolgt die Aussendung des Datentelegramms.

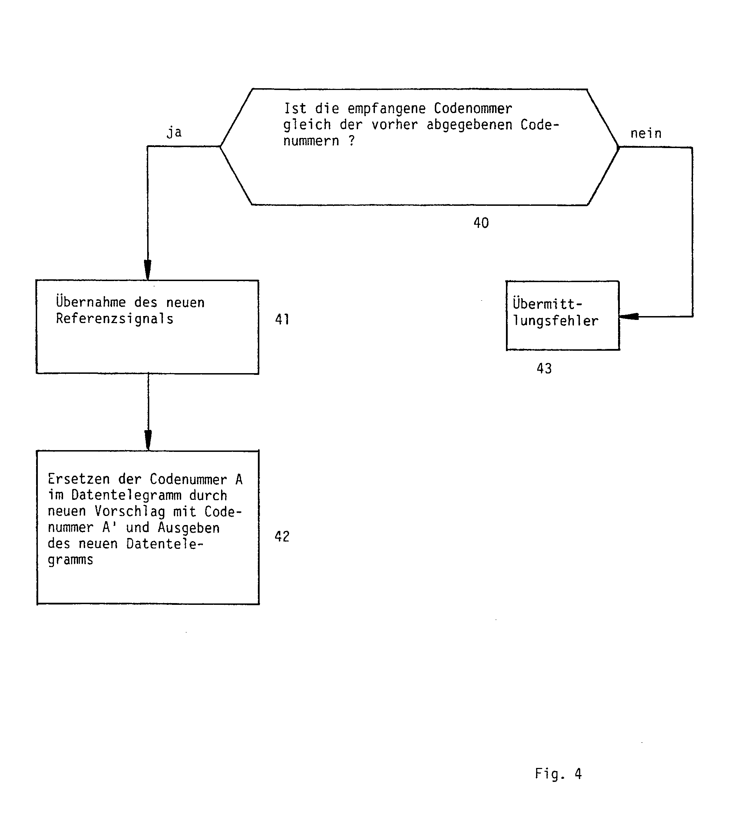

Der nachfolgende Mikroprozessor 9 prüft in einer Eingangsstufe (40 in Fig. 4), ob der von Mikroprozessor 9 im vorhergehenden Zyklus in Form einer Codenummer abgegebene Steigungsvorschlag mit dem entsprechenden Vorschlag im Datentelegramm übereinstimmt, oder ob das Datentelegramm verstümmelt ist. Das neue Referenzsignal im Datenelegramm wird in Block 41 zur Kenntnis genommen und zur weiteren Schlupfbestimmung verwendet. Außerdem wird im Block 42 der Steigungsvorschlag (Codenummer A) des Mikroprozessors 9 aus dem vorherigen Zyklus durch einen neuen Vorschlag mit der Codenummer A' im Datentelegramm ersetzt. Das geänderte Datentelegramm wird dann über die Ringleitung zum Mikroprozessor 7 weitergeleitet, wo genau so verfahren wird.

Blocks 36 bzw. 43 zeigen an, wenn das empfangene Referenzsignal bzw. die empfangene Codenummer nicht mit dem vorher ausgesandten Datenwort übereinstimmt.

## Patentansprüche

1. Verfahren zur zentralen Gewinnung eines oder mehrerer im Verlauf der Fahrzeuggeschwindigkeit angenäherten Bezugssignale für ein Bremsdruckregelsystem aus den Signalen wenigstens zweier die Radgeschwindigkeit überwachender Meßwertgeber unter Verwendung unterschiedlicher aufgrund der einzelnen Radgeschwindigkeitssignale im Vergleich zu einem Bezugssignal und gegebenenfalls anderer Kriterien alternativ einschaltbarer Steigungen für die Änderung des Bezugssignals, wobei die Bezugssignale in Mikroprozessoren, die jeweils eine Achse oder ein Rad kontrollieren, zur Schlupfbestimmung eingekoppelt werden, dadurch gekennzeichnet, daß für ein Bezugssignal in jedem Programmzyklus die einzelnen an diesem Bezugssignal beteiligten Mikroprozessoren aufgrund der dort gegebenen Verhältnisse eine der Steigungen vorschlagen und über eine Ringleitung, in der alle diese Mikroprozessoren eingeschaltet sind, diese vorgeschlagene Steigung als Codenummer an einen als Bezugssignalerzeuger dienenden Mikroprozessor (Referenzprozessor) übertragen, daß in diesem Referenzprozessor (der auch Teil eines der anderen Mikroprozessoren sein kann) die einzelnen möglichen Steigungen in eine Prioritätsreihenfolge eingeordnet sind, daß dieser Referenzprozessor aus den übermittelten Steigungsvorschlägen der anderen Mikroprozessoren und gegebenenfalls seinem Steigungsvorschlag im laufenden Programmzyklus den Steigungsvorschlag auswählt, der die höchste Priorität hat, und damit das neue Bezugssignal berechnet und daß das Bezugssignal über die Ringleitung nacheinander den übrigen Mikroprozessoren zugeleitet und in jedem für die Schlupfmessung benutzt wird.

2. Verfahren nach Anspruch 1, dadurch gekennzeichnet, daß der letzte Mikroprozessor in der Ringleitung vor dem Referenzprozessor das Bezugssignal weitergibt und daß dort das empfangene Signal auf Identität mit dem ursprünglich vom Referenzprozessor abgegebenen Bezugssignal verglichen wird.

3. Verfahren nach Anspruch 1 oder 2, dadurch gekennzeichnet, daß die vom Referenzprozessor als Codenummern empfangenen Steigungsvorschläge der anderen Mikroprozessoren vom Referenzprozessor nacheinander als Datentelegramm auf die Ringleitung zur Weiterleitung an alle Mikroprozessoren gegeben werden, und daß die einzelnen Mikroprozessoren die ihnen zugeordneten Codenummern auf Identität mit der abgegebenen Codenummer vergleichen.

4. Verfahren nach Anspruch 3, dadurch gekennzeichnet, daß der einzelne Mikroprozessor im Datentelegramm die ankommende eigene Codenummer durch die inzwischen neu ermittelte Codenummer ersetzt und das so geänderte Datentelegramm an den nächstfolgenden Mikroprozessor bzw. Referenzprozessor weitergibt.

## Claims

1. Process for the central acquisition of one or more reference signals, approximated in the course of the vehicle speed, for a brake pressure control system from the signals of at least two measuring sensors monitoring the wheel speed, using different gradients for changing the reference signal which can be switched on alternatively on the basis of the individual wheel speed signals in comparison with a reference signal and, if required, other criteria, the reference signals being input into microprocessors for the purpose of determining the slip, the said microprocessors controlling in each case one axle or one wheel, characterised in that for one reference signal in each program cycle the individual microprocessors involved with this reference signal propose one of the gradients on the basis of the conditions present there and transmits, via a ring feeder in which all these microprocessors are connected, this proposed gradient as a code number to a microprocessor (reference processor) serving as reference signal generator, in that in this reference processor (which can also be part of one of the other microprocessors) the individual possible gradients are placed in a priority sequence, in that this reference processor selects from the transferred gradient proposals of the other microprocessors and, possibly, from its gradient proposal in the running program cycle, the gradient proposal which has the highest priority and thus calculates the new reference signal, and in that the reference signal is successively fed via the ring feeder to the remaining microprocessors and is used in each of these for measurement of the slip.

2. Process according to Claim 1, characterised in that the last microprocessor in the ring feeder before the reference processor passes on the reference signal, and in that there the received signal is compared for identity with the reference signal originally issued by the reference processor.

3. Process according to Claim 1 or 2, characterised in that the gradient proposals of the other microprocessors received by the reference processor as code numbers are successively transmitted by the reference processor as data telegram onto the ring feeder in order to be passed on to all the microprocessors, and in that the individual microprocessors compare the code numbers assigned to them for identity with the issued code number.

4. Process according to Claim 3, characterised in that the individual microprocessor replaces its own incoming code number in the data telegram with the code number which has been newly determined in the meantime and passes on the data telegram which has been changed in this way to the next following microprocessor or reference processor.

**Revendications**

1. Procédé pour former de manière centrale un ou plusieurs signaux de référence voisins du profil de la vitesse du véhicule pour un système de régulation du freinage, en partant des signaux d'au moins deux capteurs surveillant la vitesse de roues en utilisant des signaux de vitesse de roues, distincts, différents par comparaison à un signal de référence et le cas échéant d'autres critères avec des pentes susceptibles d'être mises en oeuvre de manière alternative pour modifier le signal de référence, ces signaux de référence dans les microprocesseurs qui contrôlent chaque fois un essieu ou une roue étant injectés pour déterminer le glissement, procédé caractérisé en ce que dans chaque cycle de programme, pour un signal de référence, on transmet aux différents microprocesseurs participant à ce signal de référence, selon les conditions données, l'une des pentes proposées et on l'injecte dans tous ces microprocesseurs par une boucle, cette pente proposée étant transmise comme numéro de code à un microprocesseur servant de générateur de signal de référence (processeur de référence), et en ce que dans ce processeur de référence (qui peut également constituer une partie de l'un des autres microprocesseurs) on ordonne les différentes pentes possibles suivant une succession de priorités, telle que ce processeur de référence sélectionne parmi les propositions de pente, transmises par les autres microprocesseurs et le cas échéant sa propre proposition de pente, dans le cycle de programme en cours, la proposition de pente présentant la priorité la plus élevée et partant de celle-ci il calcule un nouveau signal de référence et en ce que ce signal de référence est fourni par la boucle, successivement aux autres microprocesseurs qui s'en servent chacun pour mesurer le glissement.

2. Procédé selon la revendication 1, caractérisé en ce que le dernier microprocesseur de la boucle avant le processeur de référence, transmet le signal de référence et en ce que le signal reçu est comparé quant à l'identité avec le signal de référence fourni initialement par le processeur de référence.

3. procédé selon la revendication 1 ou 2, caractérisé en ce que les propositions de pente des autres microprocesseurs reçues sous la forme de numéros de code par le processeur de référence, sont injectées successivement par le microprocesseur de référence comme télégrammes de données dans la boucle pour être transmises à tous les microprocesseurs et en ce que les différents microprocesseurs comparent les numéros de code qui leur sont associés avec le numéro de code émis, pour vérifier l'identité.

4. Procédé selon la revendication 3, caractérisé en ce que chaque microprocesseur remplace dans le télégramme de données, son propre numéro de code d'entrée par le numéro de code qui a été déterminé entre temps et le télégramme de données ainsi modifié est transmis aux microprocesseurs ou processeurs de référence suivants.

FIG.1

FIG.2

Ist das empfangene Referenzsignal
identisch mit dem vorher ausgesandten
Referenzsignal ?   30

ja                                                                    nein

Übermittlungsfehler

36

Stelle fest, welcher der     31          gespeicherte          32
eingegangenen Steigungs-                 Steigerungen
vorschläge die höchste
Priorität hat

34

35

Errechne das neue Refe-      33
renzsignal und setze es im
Datentelegramm ein; sende
das modifizierte Datentelegramm an

Fig. 3

ja     Ist die empfangene Codenommer gleich der vorher abgegebenen Code-nummern ?     nein

40

Übernahme des neuen Referenzsignals     41

Übermitt-lungsfehler

43

Ersetzen der Codenummer A im Datentelegramm durch neuen Vorschlag mit Code-nummer A' und Ausgeben des neuen Datentele-gramms     42

Fig. 4

8